Europäisches Patentamt

(19) European Patent Office

Office européen des brevets

(11) Publication number: **0 063 888**
**A1**

(12) **EUROPEAN PATENT APPLICATION**

(21) Application number: **82301863.5**

(22) Date of filing: **08.04.82**

(51) Int. Cl.³: **A 01 D 85/00**

(30) Priority: **24.04.81 GB 8112796**

(43) Date of publication of application: **03.11.82**
**Bulletin 82/44**

(84) Designated Contracting States: **BE DE FR NL**

(71) Applicant: **Saunders, Patrick George, Step Farm, Faringdon Oxfordshire (GB)**

(72) Inventor: **Saunders, Patrick George, Step Farm, Faringdon Oxfordshire (GB)**

(74) Representative: **Armitage, Ian Michael et al, MEWBURN ELLIS & CO. 2/3 Cursitor Street, London EC4A 1BQ (GB)**

(54) **Bale accumulator.**

(57) A bale accumulator has a frame (10) with an inlet (12) to receive bales and diverter gates (24, 28) to divert the bales into different positions to form a set (32A) against an abutment provided by an abutment gate (34) or a previous set (32B) which had been released into a rear part of the frame and arrested by a tail gate (38). A set formed against the abutment gate (34) trips that gate when the set is formed to allow the set to pass into the rear portion, where it keeps the abutment gate raised and forms the abutment for the next set. When two such sets are formed, the tail gate (38) is tripped to release the bales from the accumulator.

This design of accumulator is smaller than conventional accumulators of this general type.

BALE ACCUMULATOR

This invention relates to bale accumulators; that is to say apparatus designed to be towed behind an agricultural baler for collecting and arranging the bales discharged from the baler into suitable groups before depositing them in the field.

Various bale accumulators are known, and in particular may be mentioned those described in U.K. Patent Specifications 1349747 and 1461833. These accumulators work on the principle of a forward diverter gate which directs the incoming bales into one lateral half or the other of the accumulator frame, and a pair of rear diverter gates which further divert the bales in each half into different locations. In GB 1461833 four compartments are provided, separated by partitions, each compartment being able to receive two bales, so that a set of eight bales is built up before being released by the tail-gate of the accumulator. In GB 1349747 a single row of four bales are formed before being released by the tail-gate, and these can be collected in a windrowing attachment which is adapted to receive eight bales (i.e. two sets of four), and the set of eight is discharged from the windrowing attachment at a suitable time by releasing the tail-gate of the windrowing attachment.

The present invention provides a further alternative construction in which there is no requirement for partitions to separate the bales. More particularly, the present invention provides a bale accumulator comprising a frame having an inlet at its forward end to receive a succession of bales, a plurality of diverter gates within the frame each movable into different positions to divert bales into different locations, whereby a set of bales can be formed against a transverse abutment, the accumulator including transverse abutment gate means movable to release a said set of bales rearwardly into a rear portion of the frame, the rear portion incorporating a tail-gate which arrests the set of bales in a position in which they maintain said abutment gate means in a deflected condition so that the forward end of the set provide a transverse abutment for the next set of bales formed in the accumulator, the tail-gate being releasable to allow the accumulation of bales thus formed to pass rearwardly from the accumulator.

In order that the invention may be more clearly understood, one embodiment will now be described with reference to the accompanying drawings, wherein:

Fig. 1 shows a plan view of the accumulator,

Fig. 2 shows a side view of the accumulator, and

Fig. 3 shows diagrammatically part of the operating linkage.

Referring to the drawings, the accumulator comprises a steel frame 10 having an inlet chute 12 with a downwardly sloping floor 14 down which the incoming bales slide to be deposited on the ground within the area of the frame, the frame being generally open at the bottom so that as the accumulator moves forward the bales are urged relatively rearwardly by ground friction. An inlet tray 16 is pivotally connected about a vertical axis 18 to the front end of the chute, and is adapted for connection to the discharge end of the baler. The pivot 18 thus provides an articulated linkage between the baler and the accumulator. The tray is also pivoted to the chute about horizontal transverse axis so that it can accommodate to somewhat differing baler heights. The baler as a whole is preferably supported on ground wheels 20,22, the forward wheel 20 being a castor wheel.

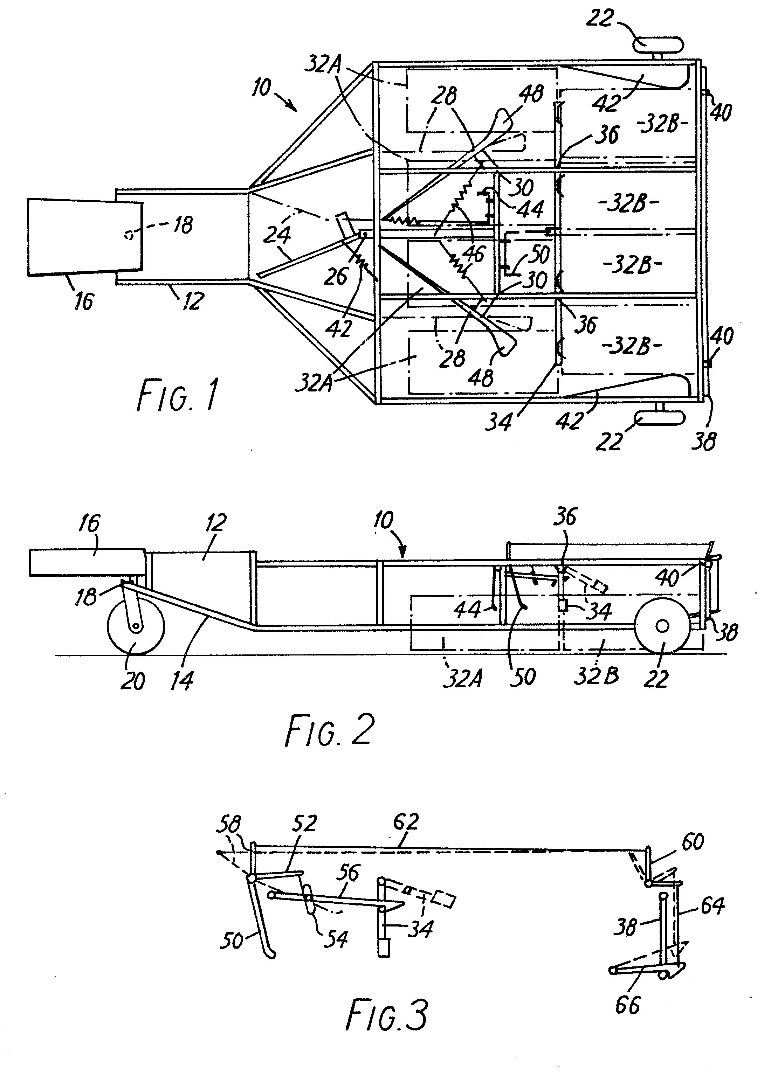

At the rear end of the chute 12 is first diverter region in which is located a forward diverter gate 24 pivoted at 26 so as to be movable between two alternative positions as shown, so that it can thereby divert incoming bales into one or the other lateral half of the frame. Behind the front diverter gate each lateral half of the frame is provided with a respective rear diverter gate 28, pivoted at 30 so as to be movable between alternative positions in which it directs bales arriving via the forward diverter gate into either of two positions. The four positions are indicated by the bales 32A. The bales are initially arrested in these positions by a transverse abutment gate 34 which is hinged at its upper edge 36 to the frame so that it can depend vertically to provide rear support for the bales 32A, or can hinge rearwardly (as shown in Fig. 2) to allow the bales to pass into a rear portion of the frame. In the rear portion of the frame, the bales are initially arrested by a tail-gate 38 which is hinged at its top edge 40 to the rear of the frame. The bales in the rear portion of the frame are indicated at 32B, and it will be observed that they have been drawn more closely together laterally by means of wedge shaped cam elements 42 on the frame.

Turning to the mechanical linkages; the forward diverter gate 24 is urged in one direction (solid lines in Fig. 1) by a spring 42, and is moved over into the other position (dot-dash lines) when a depending lever 44 is deflected by the second bale entering the right-hand half of the frame. Thereafter the next two bales will enter the left-hand side of the frame. The rear diverter gates are initially urged into the central position (solid lines in Fig. 1) by springs 46, but have wedge-shaped rear cam surfaces 48 which are acted upon by the bales entering the outermost positions so as to move the rear diverter gates into their alternative positions (dot-dash lines in Fig. 1) so that the next bales enter the inner positions. The last bale to make up the four (the inner position in the left-hand half of the frame) bears upon a depending lever 50 which, through an arm 52 and loop 54 (see Fig. 3), lifts a latch 56 which is holding the abutment gate 34 in the downward position. In this way the set of four bales are automatically released into the rear portion of the frame. In that position, where they are held by the tail-gate 38, the abutment gate 34 is maintained in a somewhat raised condition by resting upon the tops of the bales, as can be seen in Figs. 2 and 3. The length of this rearmost portion of the frame is substantially the same as that of the bales, so that the forward ends of the bales 32B in the rearmost portion now take the place of the abutment gate 34 in providing a rear abutment for the next set of four bales which are formed by the diverter gates. The next time the lever 50 is lifted on completion of the set of four bales in the forward portion of the frame, an arm 58 carried by the lever 50 operates a bell crank 60 at the rear of the frame by means of a connecting rod or wire 62, the bell crank being connected by a rod or wire 64 to a latch 66 for the tail-gate 38, so that the tail-gate is released to allow the complete set of bales to be discharged rearwardly from the accumulator.

If desired, the linkage can be modified (in a manner known per se) so that the tail-gate is not released every time the lever 50 is operated, but rather raising of the abutment gate 34 cocks the release mechanism ready for actuation by the lever 50. Thus, the tail-gate will only be released when the abutment gate 34 is in the raised condition, and hence when the accumulator is full.

Although described in relation to an accumulator for two sets of four bales, by appropriate dimensioning more than two sets of bales can be accumulated before release by the tail-gate, the penultimate set providing the transverse abutment for the final set. Also by using an appropriate system of diverter gates each set may contain other than four bales; for example sets of five bales may be preferred. This can be achieved for example by providing more than two rear diverter gates, or more than one forward diverter gate.
Moreover, the diverter gates may be arranged to turn some
of the bales to lie transversely to the accumulator as
described for example in GB 2054452.

CLAIMS:

1.    A bale accumulator comprising a frame (10) having an inlet (12) at its forward end to receive a succession of bales, a plurality of diverter gates (24,28) within the frame each movable into different positions to divert bales (32) into different locations, whereby a set of bales can be formed against a transverse abutment, characterised in that the accumulator includes transverse abutment gate means (34) movable to release a said set of bales rearwardly into a rear portion of the frame, the rear portion incorporating a tail-gate (38) which arrests the set of bales in a position in which they maintain said abutment gate means (34) in a deflected condition so that the forward end of the set (32B) provide a transverse abutment for the next set (32A) of bales formed in the accumulator, the tail-gate (38) being releasable to allow the accumulation of bales thus formed to pass rearwardly from the accumulator.

2.    A bale accumulator according to claim 1 wherein the diverter gates comprise a forward diverter gate (24) movable between alternative positions to direct incoming bales to either side of the frame, and rear diverter gates (28) to either side of the forward diverter gate and arranged to receive bales from the forward diverter gate and divert them into different locations against a transverse abutment to form a said set of bales.

3.    A bale accumulator according to claim 2 wherein there are two rear diverter gates (28), one to each side of the forward diverter gate (24), and arranged to divert the bales into four positions  to form said set of bales.

4.    A bale accumulator according to claim 1 wherein the diverter gates comprise forward diverter gate means (24) movable to divert incoming bales into different paths within the frame and a plurality of rear diverter gate means (28) movable to divert bales from the forward gate means into different locations to form a said set of bales.

5. A bale accumulator according to any one of the preceding claims wherein trip means (50) is provided adapted to be actuated by the last bale forming a set against said transverse abutment so as to release the tail-gate (38), whereby if the rear portion of the frame is occupied by bales they will be discharged from the accumulator.

6. A bale accumulator according to claim 5 wherein the trip means (50) is also arranged to release the transverse abutment gate (34) means if it is in the abutment condition.

0063888

1/1

FIG. 1

FIG. 2

FIG.3

0063888
Application number

European Patent
Office

**EUROPEAN SEARCH REPORT**

EP 82 30 1863

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-2 730 636  (BOLLMANN) <br> * Page 4, line 17 - page 6, line 5; figures 2,3 * | 1,2,4 | A 01 D  85/00 |
| | --- | | |
| A | FR-A-2 233 922  (LAFFORGUE) <br> * Page 3, line 18 - page 5, line 19; figures 1-9 * | 1 | |
| | --- | | |
| A | US-A-3 308 971  (SINDEN) <br> * Column  7, lines 3-30; figures 13-19 * | 1,5,6 | |
| | --- | | |
| A | GB-A-1 566 859  (PARSONS) <br> * Page 4, line 111 - page 5, line 55; figures 1,2 * | 1-5 | |
| | --- | | |
| A | US-A-3 924 757  (MEYER) <br> * Column  5, line 38 - column 7, line 31; figure 1 * | 1-5 | TECHNICAL FIELDS SEARCHED (Int. Cl. 3) <br><br> A 01 D |
| | --- | | |
| A | FR-A-1 263 664  (SAUNDERS) | | |
| | ----- | | |

| | | |
|---|---|---|
| The present search report has been drawn up for all claims | | |
| Place of search <br> THE HAGUE | Date of completion of the search <br> 22-07-1982 | Examiner <br> MARTIN D.R.V. |

EPO Form 1503 03 82